(19) Europäisches Patentamt
European Patent Office
Office européen des brevets

(11) EP 2 234 095 A1

(12) **EUROPEAN PATENT APPLICATION**
published in accordance with Art. 153(4) EPC

(43) Date of publication:
**29.09.2010 Bulletin 2010/39**

(51) Int Cl.:
*G09G 3/34* (2006.01)  *G02F 1/167* (2006.01)
*G02F 1/17* (2006.01)  *G09G 3/20* (2006.01)

(21) Application number: **08860041.6**

(22) Date of filing: **12.12.2008**

(86) International application number:
**PCT/JP2008/072673**

(87) International publication number:
**WO 2009/075356 (18.06.2009 Gazette 2009/25)**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **13.12.2007 JP 2007322009**

(71) Applicant: **Bridgestone Corporation Tokyo 104-8340 (JP)**

(72) Inventors:
• **YAMADA, Shuhei**
  **Kodaira-shi**
  **Tokyo 187-8531 (JP)**

• **SAKAI, Yoshikatsu**
  **Kodaira-shi**
  **Tokyo 187-8531 (JP)**
• **TSUCHIDA, Shinya**
  **Kodaira-shi**
  **Tokyo 187-8531 (JP)**

(74) Representative: **Oxley, Robin John George**
  **Marks & Clerk LLP**
  **90 Long Acre**
  **London**
  **WC2E 9RA (GB)**

(54) **INFORMATION DISPLAY PANEL DRIVING METHOD AND INFORMATION DISPLAY PANEL**

(57) A method of driving an information display panel: in which display media constituted by particles including charged particles are sealed between two substrates, at least one substrate being transparent; in which the display media, to which an electrostatic field is applied, are made to move so as to display an information image; and in which, after an erasing wherein a color is displayed on a whole screen is performed, a rewriting of an information display is performed in such a manner that a color at the erasing is changed by applying a voltage forming electrostatic field in a reverse direction as that at the erasing, is **characterized in that**, after the rewriting of the information display is finished, a voltage forming electrostatic field in the same direction as that at erasing is applied. Thereby, providing a method of driving an information display panel, in which the particles constituting the display media are not stuck and disable to the substrate if information such as an image is left for a long time as it is, and a previous display image does not remain when a new display image is to be displayed after a long time left, and to provide an information display panel.

*FIG. 4*

(a)
Case 1 of passive driving
(Whole black erasing → white display rewriting)

(b)
Case 1 of passive driving
(Whole black erasing → black display maintaining)

**Description**

TECHNICAL FIELD

The present invention relates to a method of driving an information display panel, in which display media constituted by particles including charged particles are sealed between two substrates, at least one substrate being transparent, and, in which the display media, to which an electrostatic field is applied, are made to move so as to display information such as an image, and also relates to an information display panel.

RELATED ART

Generally, as one example of a method of driving an information display panel, there is known a technique which can obtain a relatively high contrast by a low voltage (refer to, for example, Japanese Patent Laid-Open Publication No. 2002-82361). In the known technique mentioned above, in the case of switching an image, after a voltage pulse is applied in such a manner that particles to be moved to at least one substrate of a pair of substrates are attracted to a substrate to which the particles to be moved are stuck, a voltage pulse is applied in such a manner that particles to be moved are moved to an opposed substrate with respect to the substrate to which the particles to be moved are stuck.
By utilizing a known driving method including the driving method mentioned above, an information display panel, in which display media constituted by particles including charged particles are sealed between two substrates, at least one substrate being transparent, and, in which the display media, to which an electrostatic field is applied, are made to move so as to display information such as an image, can be driven. In this case, if information such as an image is left for a long time as it is, the particles constituting the display media are stuck to the substrate and become non-moved pixel (sometimes refer to stuck pixel), so that there is a drawback such that a previous display image remains when a new display image is to be displayed after a long time left.

DISCLOSURE OF THE INVENTION

The present invention has for its object to eliminate the drawbacks mentioned above and to provide a method of driving an information display panel, in which the particles constituting the display media are not stuck and disable to the substrate if information such as an image is left for a long time as it is, and a previous display image does not remain when a new display image is to be displayed after a long time left, and to provide an information display panel.
According to the present invention, a method of driving an information display panel: in which display media constituted by particles including charged particles are sealed between two substrates, at least one substrate being transparent; in which the display media, to which an electrostatic field is applied, are made to move so as to display an information image; and in which, after an erasing wherein a color is displayed on a whole screen is performed, a rewriting of an information display is performed in such a manner that a color at the erasing is changed by applying a voltage forming electrostatic field in a reverse direction as that at erasing, is **characterized in that**, after the rewriting of the information display is finished, a voltage forming electrostatic field in the same direction as that at erasing is applied.
Moreover, as a preferable embodiment of the method of driving an information display panel, there are cases: such that the voltage forming electrostatic field in the same direction as that at erasing is applied to at least pixel electrode in which a color of the erasing is displayed; such, in the case of using a passive driving method, the voltage forming electrostatic field in the same direction as that at erasing is applied to the pixel electrode wherein the color at the erasing is not displayed in such a manner that a display state is not deteriorated; such that the electrostatic filed formation voltage in the same direction as that at erasing applied in such a manner that the display state is not deteriorated: is a rectangular wave; has an applying time in a range of 10% - 30% with respect to an applying time of a rewriting voltage of the information display; and is applied to a whole screen at the same time; such that, in the case of using an active driving method, the voltage forming electrostatic field in the same direction as that at erasing is selectively applied to the pixel electrode wherein the color at the erasing is displayed; such that an application of the voltage forming electrostatic field in the same direction as that at erasing is performed at least before maintaining the information display panel for a long time; and such that an application of the voltage forming electrostatic field in the same direction as that at erasing is performed at every rewriting of the information display.
Moreover, according to the invention, an information display panel: in which display media constituted by particles including charged particles are sealed between two substrates, at least one substrate being transparent; in which electrode pairs formed by opposing the electrodes respectively arranged to the two substrates are arranged in a matrix; and in which the display media, to which an electrostatic field is applied from the electrode pairs, are made to move so as to display an information image, is **characterized in that** the information display panel is driven by the method of driving an information display panel set forth in one of claims 1 - 7.
According to the invention, since, in a driving method in which, after an erasing wherein a color is displayed on a whole screen is performed, a rewriting of an information display is performed in such a manner that a color at the erasing is changed by applying a voltage forming electrostatic field in a reverse direction as that at erasing, after the rewriting of the information display is finished, a voltage forming electrostatic field in the same direction as that at erasing is applied, the particles constituting the display media are not stuck and disable to the substrate (hereinafter, referred to stuck pixel) if information such as an image is left for a long time as it is, and a previous display image does not remain when a new display image is to be displayed after a long time left, and to provide an information display panel.

BRIEF DESCRIPTION OF THE DRAWINGS

[Fig. 1] Figs. 1a and 1b are schematic views respectively showing one embodiment of an information display panel which is an object of a driving method according to the invention.
[Fig. 2] Figs. 2a and 2b are schematic views respectively illustrating another embodiment of an information display panel which is an object of a driving method according to the invention.
[Fig. 3] Figs. 3a and 3b are schematic views respectively depicting still another embodiment of an information display panel which is an object of a driving method according to the invention.
[Fig. 4] Figs. 4a and 4b are schematic views respectively showing one embodiment of control logic for a method of driving an information display panel of a passive driving type using the present invention.
[Fig. 5] Figs. 5a and 5b are schematic views respectively illustrating another embodiment of control logic for a method of driving an information display panel of a passive driving type using the present invention.
[Fig. 6] Fig. 6 is a schematic view depicting still another embodiment of control logic for a method of driving an information display panel of an active driving type using the present invention.
[Fig. 7] Fig. 7 is a schematic view for explaining one embodiment of a method of driving an information display panel according to the invention.
[Fig. 8] Fig. 8 is a schematic view for explaining another embodiment of a method of driving an information display panel according to the invention.
[Fig. 9] Fig. 9 is a schematic view for explaining still another embodiment of a method of driving an information display panel according to the invention.
[Fig. 10] Fig. 10 is a schematic view for explaining still another embodiment of a method of driving an information display panel according to the invention.
[Fig. 11] Fig. 11 is a schematic view illustrating one embodiment of partition wall shapes of the information display panel which is an object of a driving method according to the invention.
[Fig. 12] Fig. 12 is a schematic view for explaining respective steps which perform a driving method used in the examples.
[Fig. 13] Fig. 13 is a graph showing a relation between the number of display rewritings in the examples and the number of pixels (stuck pixels) in which the display media are not driven since the particles constituting the display media are stuck thereto.

BEST MODE FOR CARRYING OUT THE INVENTION

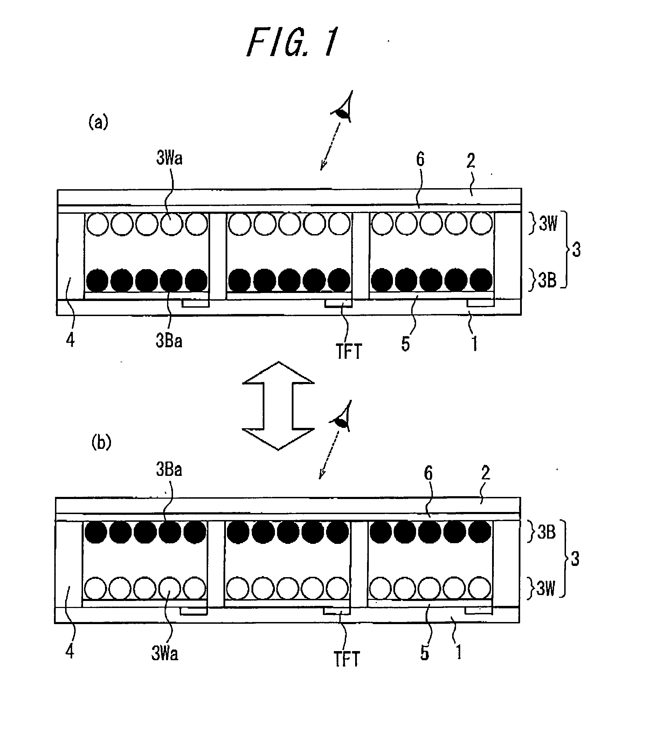

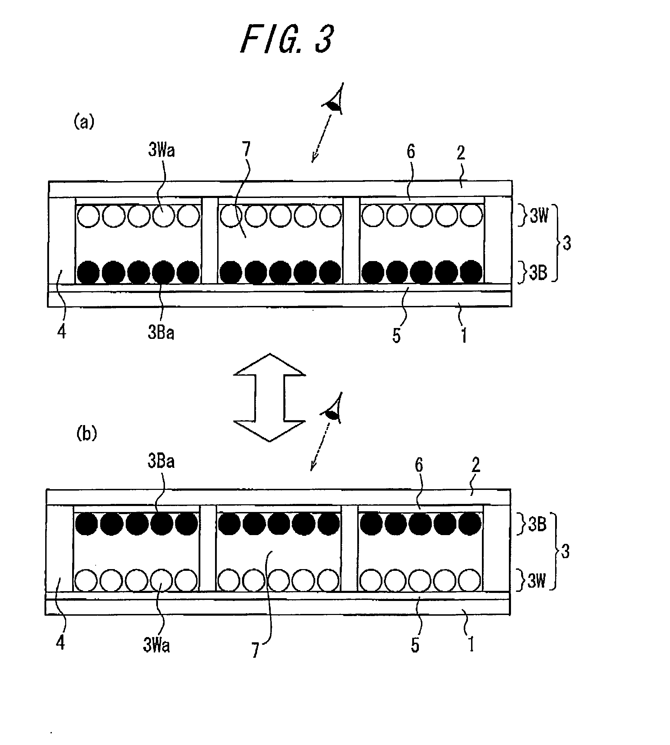

At first, a basic construction of an information display panel which is an object of the invention will be explained. In the information display panel which is an object using the present invention, an electrostatic field is applied to the particles including charged particles sealed between opposed two substrates. The particles are attracted along a direction of electrostatic field to be applied by means of Coulomb's force in such a manner that the particles charged at a low potential are attracted toward a high potential side and the particles charged at a high potential are attracted toward a low potential side, and thus the particles can be moved reciprocally by varying a direction of electrostatic field due to a switching operation of potential. Accordingly, an image can be displayed. Therefore, it is necessary to design the information display panel in such a manner that the display media can move evenly and maintain stability during a reciprocal operation or during a reserving state. Here, in the case of using particles or liquid powders as the display media, as to forces applied to the particles, there are an attraction force between the particles due to Coulomb' force, an imaging force with respect to the electrode panel, an intermolecular force, a liquid bonding force and a gravity.
Examples of the information display panel which is an object using the invention will be explained with reference to Figs. 1a and 1b - Figs. 3a and 3b.
In the examples shown in Figs. 1a and 1b, at least two groups of display media 3 having different optical reflectance and charge characteristic and consisting of particles including a particle having at least optical reflectance and charge characteristic (here, white color display media 3W constituted by particles including negatively-charged white color particles 3Wa and black color display media 3B constituted by particles including positively-charged black color particles 3Ba) are arranged between electrode pairs formed by opposing an electrode 5 (pixel electrode with TFT) arranged to a substrate 1 and an electrode 6 (common electrode) arranged to a substrate 2, and are moved in a perpendicular direction with respect to substrates 1 and 2, in accordance with an electric field generated by applying a voltage to pixel electrode pairs, so that an active driving can be performed. Then, as shown in Fig. 1a, a white color display is performed by viewing the white color display media 3W to the observer, or, as shown in Fig. 1b, a black color display is performed by viewing the black color display media 3B to an observer. In this embodiment, the display media are sealed in a cell formed by the partition walls 4, but it is possible not to arrange the partition walls. Moreover, in Figs. 1a and 1b, the partition walls arranged at the near side are omitted.

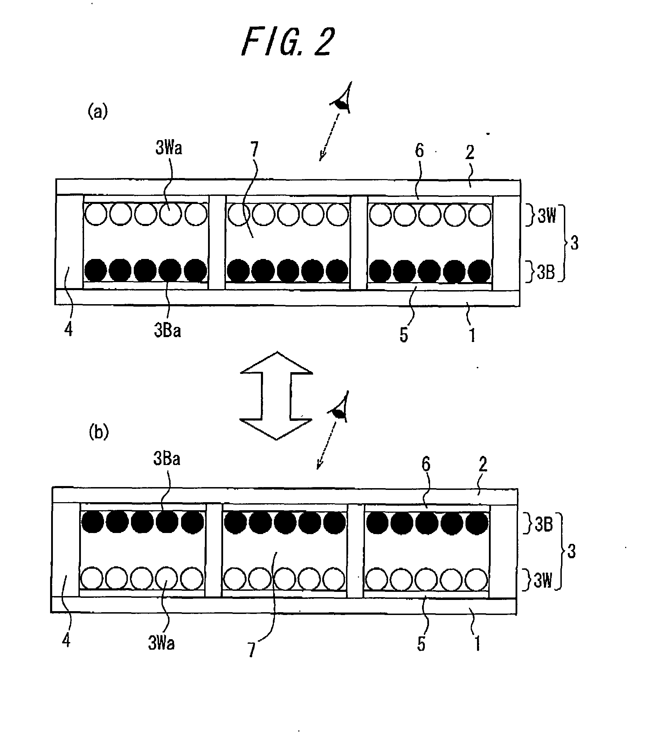

In the examples shown in Figs. 2a and 2b, at least two groups of display media 3 having different optical reflectance and charge characteristic and consisting of particles including a particle having at least optical reflectance and charge characteristic (here, white color display media 3W constituted by particles including negatively-charged white color particles 3Wa and black color display media 3B constituted by particles including positively-charged black color particles 3Ba) are sealed between the substrates and are moved, in respective cells 7 formed by the partition walls 4, in a perpendicular direction with respect to substrates 1 and 2, in accordance with an electric field generated by applying a voltage between an electrode 5 (individual electrode) arranged to the substrate 1 and an electrode 6 (individual electrode) arranged to the substrate 2, so that a passive driving can be performed. Then, as shown in Fig. 2a, a white color display is performed by viewing the white color display media 3W to the observer, or, as shown in Fig. 2b, a black color display is performed by viewing the black color display media 3B to an observer. Moreover, in Figs. 2a and 2b, the partition walls arranged at the near side are omitted.

In the examples shown in Figs. 3a and 3b, at least two groups of display media 3 having different optical reflectance and charge characteristic and consisting of particles including a particle having at least optical reflectance and charge characteristic (here, white color display media 3W constituted by particles including negatively-charged white color particles 3Wa and black color display media 3B constituted by particles including positively-charged black color particles 3Ba) are sealed between the substrates and are moved, in respective cells 7 formed by the partition walls 4, in a perpendicular direction with respect to substrates 1 and 2, in accordance with an electric field generated by applying a voltage between an electrode 5 (line electrode) arranged to the substrate 1 and an electrode 6 (line electrode) arranged to the substrate 2, so that a passive driving can be performed. Then, as shown in Fig. 3a, a white color display is performed by viewing the white color display media 3W to the observer, or, as shown in Fig. 3b, a black color display is performed by viewing the black color display media 3B to an observer. Moreover, in Figs. 3a and 3b, the partition walls arranged at the near side are omitted.

The feature of the method of driving the information display panel according to the invention is to apply a voltage forming electrostatic field in the same direction as that at erasing, after a rewriting of the information display is finished. In this manner, it is possible to prevent a sticking of particles constituting the display media. Particularly, it is preferred that the voltage forming electrostatic field in the same direction as that at erasing is applied to at least pixel electrode in which a color of the erasing is displayed. Moreover, it is preferred that, in the case of using a passive driving method, the voltage forming electrostatic field in the same direction as that at erasing is applied to the pixel electrode wherein the color at the erasing is not displayed in such a manner that a display state is not deteriorated. In addition, if the voltage which does not deteriorate a display state is applied to a whole screen at the same time, it is possible to perform a preserving process at short times. It is desirable to perform such a process before a long-term preserving of the information display panel for reducing power consumption. However, if such a voltage is applied every time the rewriting operation is finished, it is most desirable since the long-term preserving can be performed with no special processing.

It is assumed that a mechanism for preventing particle sticking is as follows. Mobility of the particles in the cell is varied due to size, charge amount, arrangement thereof. If the voltage forming electrostatic field is applied, all the particles do not start to move at the same time. A part of the particles having excellent mobility start to move first, and then the other particles start to move correspondingly by crashing the firstly moved particles to the other particles. Hereinafter, we refer the particles having mobility with respect to an electrostatic field in the rewriting direction to trigger particles. As a cause for the particle sticking, it is assumed that the trigger particles are moved to an extent such that a contrast is not affected by means of effects of a cross-talk mentioned below, a disturbance and so on. In the known driving method, a large number of the trigger particles are moved even in a cell for a color of erasing when the rewriting is performed. Therefore, if the rewriting is to be performed after a long-term preservation under a state such that a displayed image is maintained as it is, the particles are difficult to move since the trigger particles are not existent. As a result, the particle sticking occurs. On the other hand, in the present invention, after the rewriting is finished, the voltage forming electrostatic field in the same direction as that at erasing is applied. In this manner, the trigger particles are intentionally formed, and thus it is possible to prevent the particle sticking.

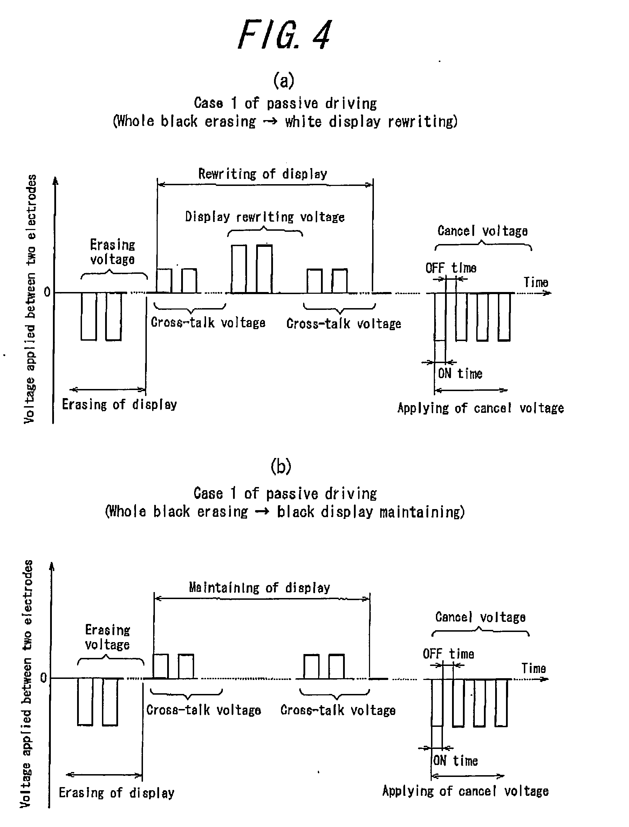

Figs. 4a and 4b are schematic views respectively showing one embodiment of control logic for a method of driving an information display panel according to the invention, and indicate respectively one embodiment of a pulse voltage application in a passive driving. In the embodiments shown in Figs. 4a and 4b, there are shown one example of a pulse voltage applied to a certain pixel electrode when the rewriting is performed from a color of erasing and one example of a pulse voltage applied to a certain pixel electrode when a color of erasing is maintained as it is. They shown one example such that, the rewriting of display is performed after the display is erased, and the pulse voltage for generating electrostatic field in the same direction as that at erasing is applied, which is the feature of the present invention. Hereinafter, we sometimes refer the pulse voltage mentioned above to a cancel voltage.

Here, as for a waveform of the cancel voltage, a rectangular wave pulse is indicated. However, use may be made of triangular wave pulse, since curve pulse, trapezoidal wave pulse as the other waveform of the cancel voltage. Moreover, the number of applying the cancel voltage may be suitably selected in relation to conditions such that the particle sticking easily occurs and so on. As the number of applying the pulse voltage, since an effect of preventing the particle sticking is small only by one pulse application, it is preferred to perform pulse applications at several times other than one time, and it is more preferred to set the number of applying the pulse voltage in a range of 5 - 100 times. In this case, if it is less than 5 times, the effect of the present invention is small, and even if it exceeds 100 times, the effect obtained by the pulse applications over 100 times is the same as that obtained by the pulse applications at 100 times. Therefore, it is preferred to be in a range of 5 - 100 times.

In the case of applying the cancel voltage as the voltage forming electrostatic field in the same direction as that at erasing as shown in Fig. 4a, it is preferred to apply a voltage, in such a manner that a display state is not deteriorated if a voltage is applied to a pixel electrode at which a color of erasing is not displayed. Here, as a preferred embodiment of "apply a voltage, in such a manner that a display state is not deteriorated", it is preferred to apply a pulse voltage having same polarity as that in a direction of erasing for an applying time shorter that that at erasing or that of the pulse voltage applied when the display rewriting is performed.

Moreover, if use is made of a pulse voltage having same polarity as that in a direction of erasing and having an amplitude, which is less than that when the pulse voltage applied at the erasing is applied, when an applying time is equal to that in the case that the erasing is performed or longer, it is possible to apply a voltage which does not deteriorate the display state.

Here, in the information display panel used in the present invention, it is understood that, since amplitude and an applying time of the voltage applied to the pixel electrode have threshold values when the display rewriting is performed, a large number of particles are moved if they exceed the threshold values and the display is rewritten. In the present invention, we find that even if the pulse voltage which does not rewrite the display is applied, trigger particles start to move and affect the particle sticking, and accordingly the present invention is achieved.

In the present invention, it is important to apply the cancel voltage mentioned above to the pixel electrode especially at a side of erasing color. However, in the passive driving, if the cancel voltage is applied by selecting the pixel electrodes sequentially, a processing time corresponds to the number of scan lines, and thus the processing time need if the number of the scan lines is large. Therefore, the cancel voltage which does not deteriorate the display state is applied to all the pixel electrodes at the same time as mentioned above, an effect is not applied to the image display which is not at a side of the erasing color, and thus the effect of the present invention can be obtained in a short period of time.

Moreover, as to a pulse applied when the display is erased or when the display rewriting is performed as shown in Figs. 4a and 4b, an explanation is effected by one example. When the erasing is performed, as mentioned above, a voltage having an applying time and amplitude necessary for the display rewriting or erasing is applied, thereby deleting the display. In addition, when the display rewriting is performed, a cross-talk voltage and a voltage for the display rewriting are applied. The thresholds of the applying time and amplitude of the pulse voltage necessary for the erasing is the same as those necessary for the display rewriting, and only the polarities thereof are different. Hereinafter, a voltage applied when the erasing is performed is simply referred to an erasing voltage sometimes, and a voltage necessary for the rewriting from a color of erasing when the rewriting is performed is sometimes referred to a rewriting voltage.

A term "cross-talk voltage" in this embodiment will be explained. In the case of passive driving, a voltage is applied even to a pixel that aims to be maintained as a color of erasing, which is formed by the same line electrode as that of a pixel to be rewritten. Therefore, a voltage having half amplitude as that necessary for the display rewriting is applied from a side of the scan electrode which is not during the display rewriting so as to be unchanged. As a result, a voltage having half amplitude as that for the display is applied to the pixel that aims to be maintained as a color of erasing. In this case, as mentioned above, since a movement of particles for the display rewriting has a threshold value with respect to the applying time and amplitude of the voltage, the display is not rewritten. This voltage is referred to "cross-talk voltage".

This voltage is an applied voltage which does not correspond to the rewriting, but is shown in the figure since this voltage is important for preventing the display rewriting with respect to the rewriting unintended pixel.

The applying voltage and amplitude of the cancel voltage used in the present invention are determined on the basis of the erasing pulse voltage, and they do not correspond to the applying time and amplitude of the cross-talk voltage.

Since a term "cross-talk" has the same meaning as a term "cross-talk" of a phone line which means a crossed line, it is referred to "cross-talk voltage".

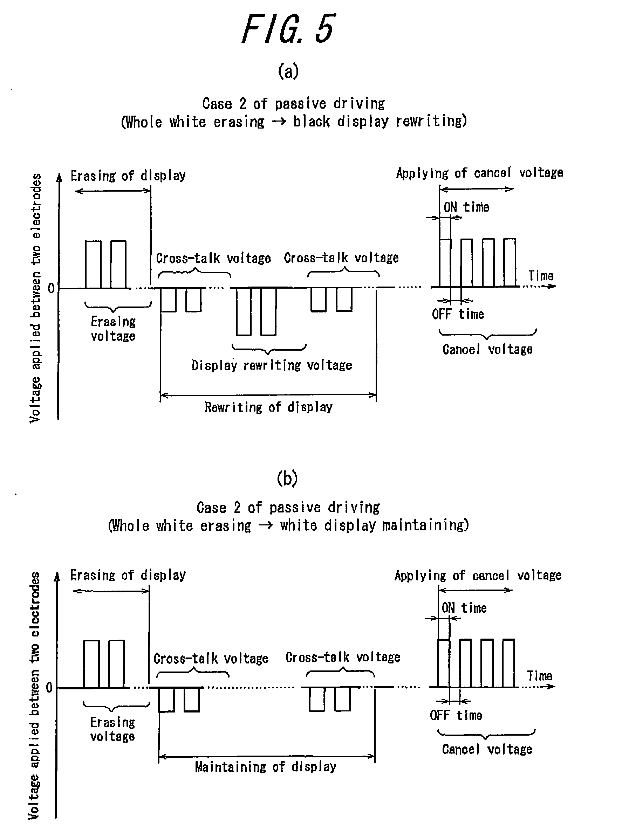

It should be noted that examples shown in Figs. 5a and 5b show the examples in which a whole white erasing is performed, while the examples shown in Figs. 4a and 4b show the examples in which the whole black erasing is performed. Therefore, the same explanation can be applied to the examples shown in Figs. 5a and 5b if the black color is changed to the white color and the white color is change to the black color in the examples shown in Figs. 4a and 4b.

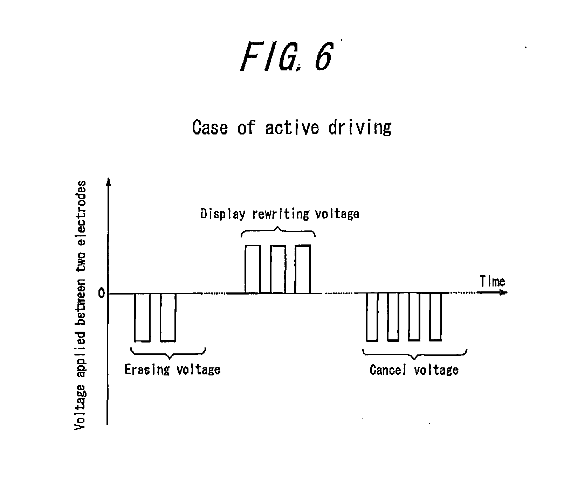

Fig. 6 is a schematic view showing another embodiment of control logic for a method of driving an information display panel according to the invention, and indicates one embodiment of a pulse voltage application in an active driving. The active driving is a method of driving by an electrode construction in which a voltage can be applied independently to all the pixel electrodes, by using the construction shown in Fig. 1 for example.

In the embodiment of the active driving shown in Fig. 6, a cross-talk voltage is not generated and only a voltage for the display rewriting is used for the display rewriting operation.

In this case, since, even in the case of applying the cancel voltage, the cross-talk is not generated, a cancel pulse can be applied independently to the necessary pixel electrode only. Particularly, if the cancel pulse is inputted selectively to the pixel electrode of a color of erasing after the display rewriting is performed, the power consumption can be reduced and thus it is preferable.

Moreover, if a function for rewriting the particles which are moved due to the cross-talk voltage or disturbance when the display rewriting is performed is taking into consideration, it is preferable that, since the cancel voltage mentioned above is applied only before a long-term processing after the display rewriting is finished, the power consumption can be reduced. In the case of inputting the cancel voltage every time after the display rewriting is performed, a long-term preservation can be performed always by using no specific processing. These driving methods can be selected suitably in relation to specification and application of a finished product.

Moreover, the number of pulse applying of the pulse voltage at erasing and the number of pulse applying of a voltage for the display rewriting voltage and a cross-talk voltage can be made plural as shown in Fig. 4. In the information display panel using the present invention, if the cancel voltage is set in such a manner that the display rewriting is not influenced, the effect according to the invention can be obtained.

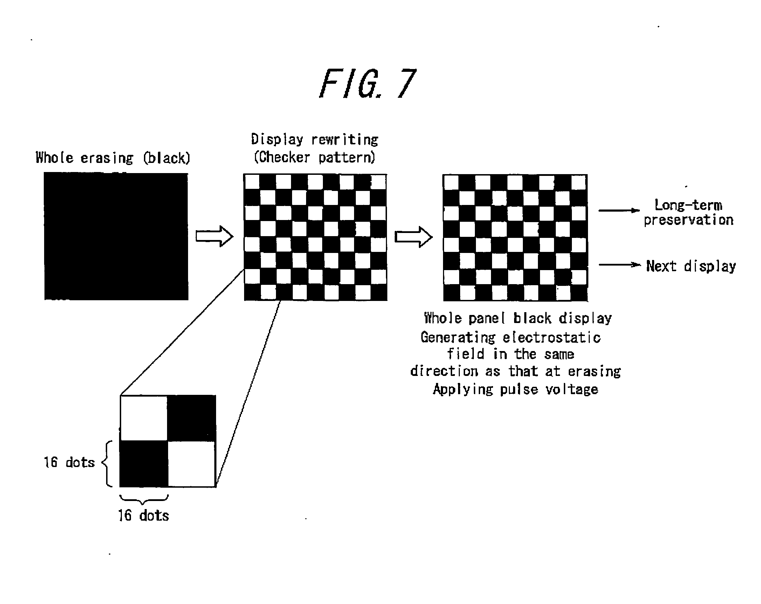

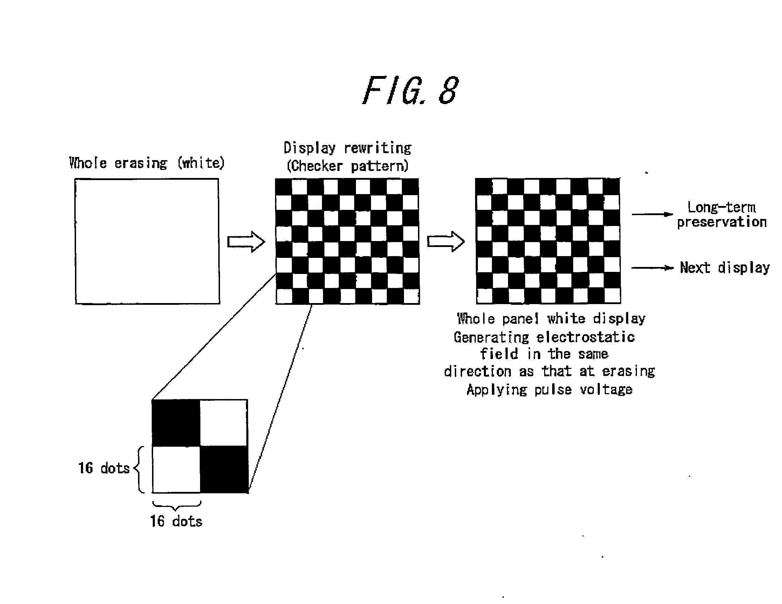

Fig. 7 and Fig. 8 are schematic views respectively explaining a method of driving an information display panel according to the invention.

In the embodiment shown in Fig. 7, firstly a pulse voltage for erasing which make a whole surface of an information display panel 11 of a dot-matrix display type to a black display is applied between electrodes 5and 6 so as to perform a whole erasing (black). Then, the rewriting of the information display is performed. In this embodiment, the display of black color and the display of white color are performed alternately every squares each having 16 dots × 16 dots for example so as to form a checker pattern, which is realized by performing the rewriting toward a white color display after the whole black color display. Therefore, the display rewriting voltage for rewriting a display toward the white color display is applied between the electrodes 5 and 6 which are to be displayed as a white color, so that the checker pattern is displayed. Then, in the whole surface of the information display panel 11 on which the checker pattern is displayed, a pulse voltage having the same polarity as that of the erasing voltage (here, a voltage having a polarity which makes the display color black, i.e., a voltage having an electrostatic field in the same direction as that at erasing), which does not deteriorate the display state of the information display panel 11, is applied between the electrodes 5 and 6.

In the embodiment shown in Fig. 7, a term "the display state is not deteriorated" means that, if a voltage having a polarity which becomes a black color display to a portion of a white color display of the information display panel 11, the white color display does not become the black color display. Here, it is preferred that a pulse voltage having an inverse polarity as that of the rewriting voltage of the information display applied in such a manner that the display state is not deteriorated has an applying time which is 10% - 30% of the applying time of the erasing voltage.

In the information display panel to which the present invention is applied, if the long-term preservation of the information display panel 11 is performed or the next display rewriting of the information display panel 11 is performed, there are only few cases such that the particles constituting the display media are stuck to the substrate and are not moved, in the display rewriting after the long-term preservation of the next display rewriting, and thus a case, such that the preservation display is not erased and remains, does not easily occur.

In the embodiment shown in Fig. 8, firstly a voltage for erasing which makes a whole surface of an information display panel 11 of a dot-matrix display type to a white display is applied between electrodes 5and 6 so as to perform a whole erasing (white). Then, the rewriting of the information display is performed. In this embodiment, the display of black color and the display of white color are performed alternately every squares each having 16 dots × 16 dots for example so as to form a checker pattern, which is realized by performing the rewriting toward a black color display after the whole white color display. Therefore, the display rewriting voltage for rewriting a display toward the black color display is applied between the electrodes 5 and 6 which are to be displayed as a black color, so that the checker pattern is displayed. Then, in the whole surface of the information display panel 11 on which the checker pattern is displayed, a pulse voltage having the same polarity as that of the erasing voltage (here, a voltage having a polarity which makes the display color white, i.e., a voltage having an electrostatic field in the same direction as that at erasing), which does not deteriorate the display state of the information display panel 11, is applied between the electrodes 5 and 6.

In the embodiment shown in Fig. 8, a term "the display state is not deteriorated" means that, if a voltage having a polarity which becomes a white color display to a portion of a black color display of the information display panel 11, the black color display does not become the white color display. Here, it is preferred that a pulse voltage having an inverse polarity as that of the rewriting voltage of the information display applied in such a manner that the display state is not deteriorated has an applying time which is 10% - 30% of the applying time of the erasing voltage.

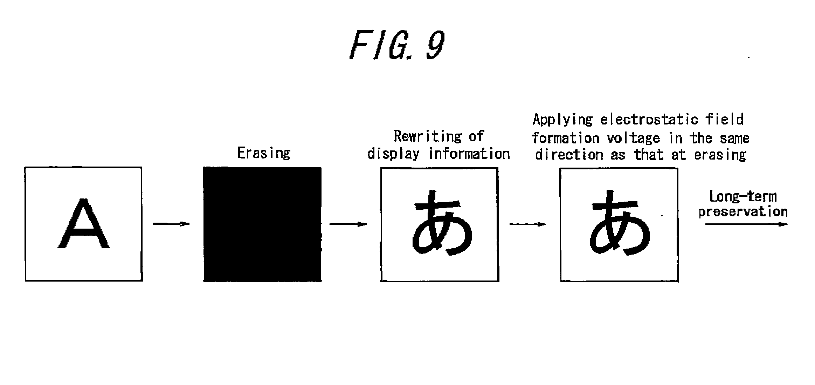

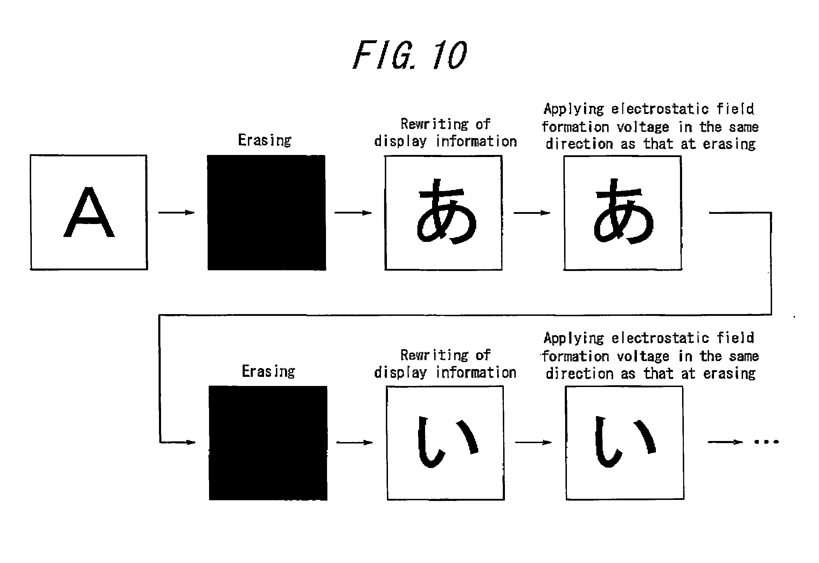

Fig. 9 and Fig. 10 are schematic views respectively explaining another embodiment of a method of driving an information display panel according to the invention. In the embodiment shown in Fig. 9, it is shown an embodiment in which an application of the voltage forming electrostatic field in the same direction as that at erasing is performed before a long-term preservation of the information display panel is performed. Moreover, in the embodiment shown in Fig. 10, it is shown an embodiment in which an application of the voltage forming electrostatic field in the same direction as that at erasing is performed every rewritings of the display information.

Hereinafter, respective members constituting the information display panel which is an object of the driving method according to the invention will be explained.

As the substrate, at least one of the substrates is the transparent substrate through which a color of the display media can be observed from outside of the information display panel, and it is preferred to use a material having a high transmission factor of visible light and an excellent heat resistance. The other substrate may be transparent or may be opaque. Examples of the substrate material include polymer sheets such as polyethylene terephthalate (PET), polyethylene naphthalate (PEN), polyethylene (PE), polycarbonate (PC), polyimide(PI), polyether sulfone (PES), or acryl and metal sheets having flexibility and inorganic sheets such as glass, quartz or so having no flexibility. The thickness of the substrate is preferably 2 to 2000 $\mu$m, more preferably 5 to 1000 $\mu$m. When the thickness is too thin, it becomes difficult to maintain strength and distance uniformity between the substrates, and when the thickness is thicker than 2000 $\mu$m, there is a drawback as a thin-type information display panel.

As a material of the electrode, use is made of metals such as aluminum, silver, nickel, copper, gold, or, conductive metal oxides such as indium tin oxide (ITO) , indium zinc oxide (IZO) , aluminum-doped zinc oxide (AZO) , indium oxide, conductive tin oxide, antimony tin oxide (ATO) , conductive zinc oxide and so on, or, conductive polymers such as polyaniline, polypyrrole, polythiophene and so on, and they are used by being suitably selected. As an electrode forming method, use is made of a method in which the materials mentioned above are made to a thin film by means of sputtering method, vacuum vapor deposition method, CVD (chemical vapor deposition) method, coating method and so on, a method in which a metal foil (for example, rolled copper foil) is laminated, or, a method in which conductive materials and solvents are mixed with synthetic resin binder and the mixture is sprayed. A transparency is necessary for the electrode arranged to the substrate at an observation side (display surface side), but it is not necessary to the substrate 1 at a rear side. In both cases, the materials mentioned above, which are transparent and have a pattern formation capability, can be suitably used. Additionally, the thickness of the electrode may be suitable unless the electro-conductivity is absent or any hindrance exists in optical transparency, and it is preferable to be 0.01 to 10 $\mu$m, more preferable to be 0.05 to 5 $\mu$m. The material and the thickness of the electrode arranged to the rear substrate are the same as those of the electrode arranged to the substrate at the display side, but transparency is not necessary. In this case, the electrode arranged to the substrate may be exposed, or may not be exposed by coating an insulation film on its surface.

As the partition wall arranged according to need to the substrate, a shape of the partition wall is suitably designed in accordance with a kind of the display media used for the display and is not restricted. However, it is preferred to set a width of the partition wall to 2 - 100 $\mu$m more preferably 3 - 50 $\mu$m and to set a height of the partition wall to 10 - 500 $\mu$m more preferably 10 - 200 $\mu$m.

Moreover, as a method of forming the partition wall, use may be made of a double rib method wherein ribs are formed on the opposed substrates 1, 2 respectively and they are connected with each other and a single rib method wherein a rib is formed on one of the opposed substrates only. The present invention may be preferably applied to both methods mentioned above.

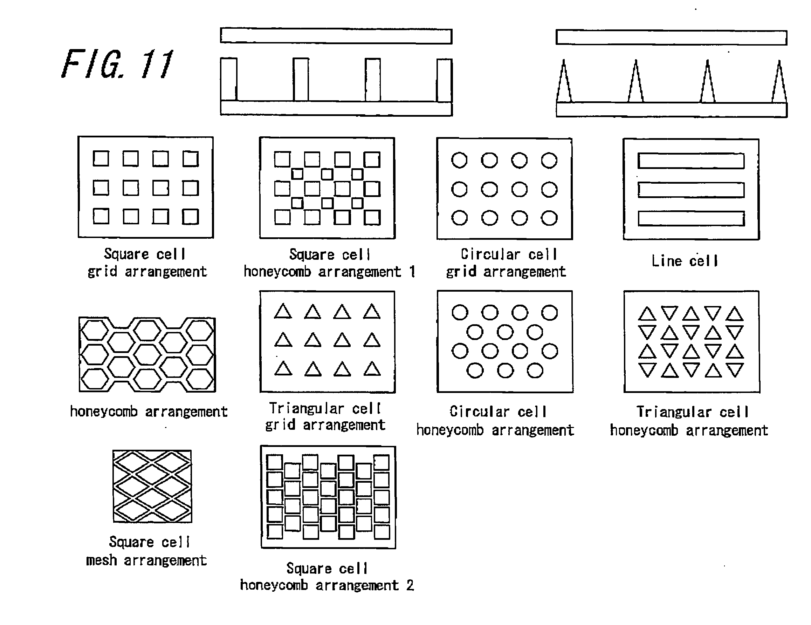

The cell formed by the partition walls each made of rib has a square shape, a triangular shape, a line shape, a circular shape and a hexagon shape, and has an arrangement such as a grid, a honeycomb and a mesh, as shown in Fig. 11 viewed from a plane surface of the substrate. It is preferred that the portion corresponding to a cross section of the partition wall observed from the display side (an area of the frame portion of the display cell) should be made as small as possible. In this case, a clearness of the image display can be improved.

The formation method of the partition wall is not particularly restricted, however, a die transfer method, a screen-printing method, a sandblast method, a photolithography method and an additive method. Among them, it is preferred to use a photolithography method using a resist film or a die transfer method.

Then, charged particles constituting the display media used in the invention will be explained. The charged particles may be used as the display media constituted by the particles only, or, as the display media constituted by mixing various groups of the particles.

The charged particle may be composed of resins as a main ingredient, and can include according to need charge control agents, coloring agent, inorganic additives and so on as is the same as the known one. Hereinafter, typical examples of resin, charge control agent, coloring agent, additives, and so on will be explained.

Typical examples of the resin include urethane resin, urea resin, acrylic resin, polyester resin, acryl urethane resin, acryl urethane silicone resin, acryl urethane fluorocarbon polymers, acryl fluorocarbon polymers, silicone resin, acryl silicone resin, epoxy resin, polystyrene resin, styrene acrylic resin, polyolefin resin, butyral resin, vinylidene chloride resin, melamine resin, phenolic resin, fluorocarbon polymers, polycarbonate resin, polysulfon resin, polyether resin, and polyamide resin. Two kinds or more of these may be mixed and used. For the purpose of controlling the attaching force with the substrate, acryl urethane resin, acryl silicone resin, acryl fluorocarbon polymers, acryl urethane silicone resin, acryl urethane fluorocarbon polymers, fluorocarbon polymers, silicone resin are particularly preferable.

Examples of the electric charge control agent include, but not particularly specified to, negative charge control agent such as salicylic acid metal complex, metal containing azo dye, oil-soluble dye of metal-containing (containing a metal ion or a metal atom), the fourth grade ammonium salt-based compound, calixarene compound, boron-containing compound (benzyl acid boron complex) , and nitroimidazole derivative. Examples of the positive charge control agent include nigrosine dye, triphenylmethane compound, the fourth grade ammonium salt compound, polyamine resin, imidazole derivatives, etc. Additionally, metal oxides such as ultra-fine particles of silica, ultra-fine particles of titanium oxide, ultra-fine particles of alumina, and so on; nitrogen-containing circular compound such as pyridine, and so on, and these derivates or salts; and resins containing various organic pigments, fluorine, chlorine, nitrogen, etc. can be employed as the electric charge control agent.

As for a coloring agent, various kinds of organic or inorganic pigments or dye as will be described below are employable.

Examples of black pigments include carbon black, copper oxide, manganese dioxide, aniline black, and activate carbon.

Examples of blue pigments include C.I. pigment blue 15:3, C.I. pigment blue 15, Berlin blue, cobalt blue, alkali blue lake, Victoria blue lake, phthalocyanine blue, metal-free phthalocyanine blue, partially chlorinated phthalocyanine blue, first sky blue, and Indanthrene blue BC.

Examples of red pigments include red oxide, cadmium red, diachylon, mercury sulfide, cadmium, permanent red 4R, lithol red, pyrazolone red, watching red, calcium salt, lake red D, brilliant carmine 6B, eosin lake, rhodamine lake B, alizarin lake, brilliant carmine 3B, and C.I. pigment red 2.

Examples of yellow pigments include chrome yellow, zinc chromate, cadmium yellow, yellow iron oxide, mineral first yellow, nickel titanium yellow, navel orange yellow, naphthol yellow S, hanzayellow G, hanzayellow 10G, benzidine yellow G, benzidine yellow GR, quinoline yellow lake, permanent yellow NCG, tartrazinelake, and C.I. pigment yellow 12.

Examples of green pigments include chrome green, chromium oxide, pigment green B, C.I. pigment green 7,Malachite green lake, and final yellow green G.

Examples of orange pigments include red chrome yellow, molybdenum orange, permanent orange GTR, pyrazolone orange, Balkan orange, Indanthrene brilliant orange RK, benzidine orange G, Indanthrene brilliant orange GK, and C.I. pigment orange 31.

Examples of purple pigments include manganese purple, first violet B, and methyl violet lake.

Examples of white pigments include zinc white, titanium oxide, antimony white, and zinc sulphide.

Examples of extenders include baryta powder, barium carbonate, clay, silica, white carbon, talc, and alumina white. Furthermore, there are Nigrosine, Methylene Blue, rose bengal, quinoline yellow, and ultramarine blue as various dyes such as basic dye, acidic dye, dispersion dye, direct dye, etc.

Examples of inorganic additives include titanium oxide, zinc white, zinc sulphide, antimony oxide, calcium carbonate, pearl white, talc, silica, calcium silicate, alumina white, cadmium yellow, cadmium red, titanium yellow, Pressian blue, Armenian blue, cobalt blue, cobalt green, cobalt violet, ion oxide, carbon black, manganese ferrite black, cobalt ferrite black, copper powder, aluminum powder.

These coloring agents and inorganic additives may be used alone or in combination of two or more kinds thereof. Particularly, carbon black is preferable as the black coloring agent, and titanium oxide is preferable as the white coloring agent. The particles for display media having a desired color can be produced by mixing the coloring agents mentioned above.

Moreover, as the average particle diameter d (0.5) of the charged particles (hereinafter, called sometimes as particles) , it is preferred to set d (0.5) to 1 - 20 $\mu$m and to use even particles. If the average particle diameter d (0.5) exceeds this range, the image clearness sometimes deteriorated, and, if the average particle diameter is smaller than this range, an agglutination force between the particles becomes larger and the movement of the particles is prevented.

Further, it is preferred that particle diameter distribution Span of the particles, which is defined by the following formula, is less than 5 preferably less than 3:

$$\text{Span} = (d(0.9) - d(0.1))/d(0.5) \;;$$

(here, d (0.5) means a value of the particle diameter expressed by $\mu$m wherein an amount of the particles having the particle diameter larger than or smaller than this value is 50%, d (0.1) means a value of the particle diameter expressed

by μm wherein an amount of the particles having the particle diameter smaller than this value is 10%, and d (0.9) means a value of the particle diameter expressed by μm wherein an amount of the particles having the particle diameter smaller than this value is 90%).

If the particle diameter distribution Span of the particles is set to not more than 5, the particle diameter becomes even and it is possible to perform an even particle movement.

Furthermore, in the case of using a plurality groups of particles, among the particles constituting the used display media, it is preferred to set a ratio of d (0.5) of the particles having smallest diameter with respect to d (0.5) of the particles having largest diameter to not more than 10. The particles having different charge characteristics with each other are moved reversely, even if the particle diameter distribution Span is made smaller. Therefore, it is preferred that the particle sizes of the particles are made to be even with each other, and same amounts of the particles are easily moved in a reverse direction, and thus that is this range.

Here, the particle diameter distribution and the particle diameter mentioned above can be measured by means of a laser diffraction / scattering method. When a laser light is incident upon the particles to be measured, a light intensity distribution pattern due to a diffraction / scattering light occurs spatially. This light intensity distribution pattern corresponds to the particle diameter, and thus it is possible to measure the particle diameter and the particle diameter distribution. In the present invention, it is defined that the particle diameter and the particle diameter distribution are obtained by a volume standard distribution. Specifically, the particle diameter and the particle diameter distribution can be measured by means of a measuring apparatus Mastersizer 2000 (Malvern Instruments Ltd.) wherein the particles setting in a nitrogen gas flow are calculated by an installed analysis software (which is based on a volume standard distribution due to Mie's theory).

Further, in the case that the display media constituted by the particles including charged particles are applied to a dry-type information display panel, it is important to control a gas in a gap surrounding the display media between the substrates, and a suitable gas control contributes an improvement of display stability. Specifically, it is important to control a humidity of the gap gas to not more than 60% RH at 25˚C, preferably not more than 50% RH. The above gap means a gas portion surrounding the display media obtained by substituting the electrodes 5, 6 (in the case that the electrodes are arranged inside of the substrate), an occupied portion of the display media 3, an occupied portion of the partition walls 4 and a seal portion of the device from the space between the substrate 1 and the substrate 2 for example in Figs. 1a and 1b - Figs. 3a and 3b. A kind of the gap gas is not limited if it has the humidity mentioned above, but it is preferred to use dry air, dry nitrogen gas, dry argon gas, dry helium gas, dry carbon dioxide gas, dry methane gas and so on. It is necessary to seal this gas in the device so as to maintain the humidity mentioned above. For example, it is important to perform the operations of filling the particles and assembling the substrate under an atmosphere having a predetermined humidity and to apply a seal member and a seal method for preventing a humidity inclusion from outside of the device.

In the information display panel which is an object according to the invention, an interval between the substrates is not restricted if the particles or the liquid powders can be moved and a contrast can be maintained, and it is adjusted normally to 2 - 500 μm, preferably 5 - 200 μm. Moreover, it is preferred to control a volume occupied rate of the particles or the liquid powders in a space between the opposed substrates to 5 - 70 %, more preferably 5 - 60 %. If the volume occupied rate of the particles or the liquid powders exceeds 70 %, the particles or the liquid powders become difficult to move, and if it is less than 5 %, a sufficient contrast cannot be obtained and a clear image display is not performed.

<Examples>

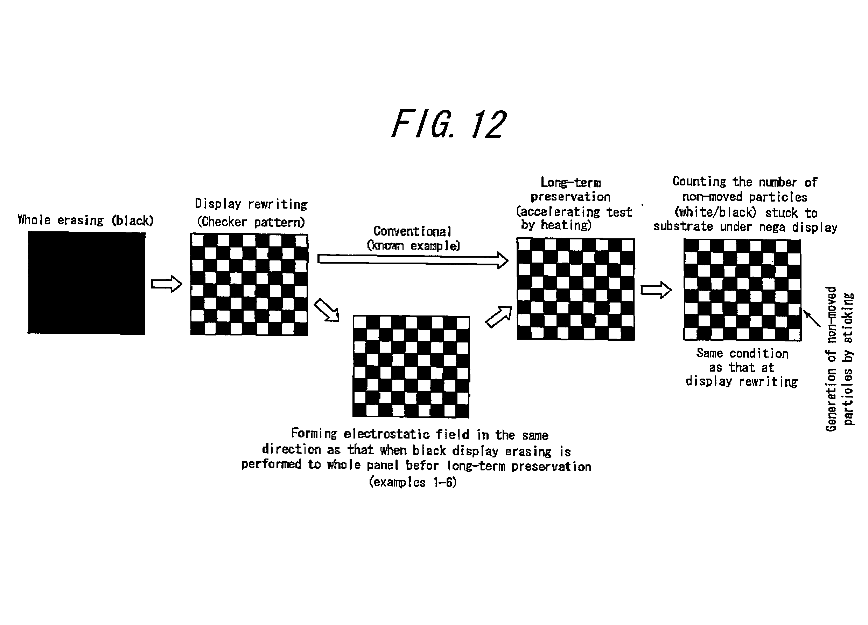

The information display panel of the dot-matrix display type (having the construction shown in Fig. 3), in which the number of the pixels is 25600 (160 × 160) and the passive driving is performed, was manufactured, and the following tests were performed with respect to respective information display panels. Stripe electrodes were provided to a display region of the thus manufactured panel in such a manner that a surface of the stripe electrode is exposed. According to the processes shown in Fig. 12, a heat acceleration test for simulating the long-term preservation was performed with respect to the information display panels to which the driving method according to examples (present invention) or according to comparative examples was applied, and the example according to the invention and the comparative example were compared. At first, a pulse voltage having a rectangular wave, which makes the black display, was applied between the electrodes 5 and 6, so that the whole erasing (black display) was performed. Then, the checker pattern, in which the display of black color and the display of white color are performed alternately every square areas constituted by the predetermined number of pixels, was rewritten by applying by applying the voltage forming electrostatic field, which rewrite the display to the white color display after the whole black color display was finished. The display rewriting to the white color was performed by applying the voltage forming electrostatic field, which makes the white color display, between the electrodes 5 and 6. Here, a time applying the rectangular pulse as the erasing voltage and the display rewriting voltage (hereinafter, sometimes refer to ON time) was set in a range of 80 - 110 μs, and a time, in which no rectangular pulse was applied (hereinafter, sometimes refer to OFF time), was set at 150 μs.

Then, a pulse voltage having an inverse polarity as that of the display rewriting pulse voltage (pulse voltage for black display rewriting), in which the display state is not deteriorated, was applied between the electrodes 5 and 6 of the pixels of the information display panel on which the checker pattern is displayed.

The ON time of the cancel voltage was set to 10 - 30 μs, and the OFF time thereof was set at 50 μs.

The pulse voltage, in which the display state is not deteriorated, could be obtained by controlling voltage applying conditions (amplitude of voltage, voltage applying time: ON time, voltage non-applying time: OFF time, and so on). In the information display panels of the examples 1, 4, and 7, the pulse voltage to be used was 10 μs of ON time i.e. pulse width, 50 μs of OFF time and 5 times of the number of pulse applying, while an amplitude thereof is the same as that at erasing. In the information display panels of the examples 2, 5, and 8, the pulse voltage to be used was 30 μs of ON time i.e. pulse width, 50 μs of OFF time and 10 times of the number of pulse applying, while an amplitude thereof is the same as that at erasing. In the information display panels of the examples 3, 6 and 9, the pulse voltage to be used was 30 μs of ON time i.e. pulse width, 50 μs of OFF time and 30 times of the number of pulse applying, while an amplitude thereof is the same as that at erasing. In the information display panel of the comparative example, which performs the known driving method, the cancel voltage was not applied. Then, the thus prepared information display panels were maintained at 50 ˚C for 96 hours so as to perform the heat acceleration test for simulating the long-term preservation. After that, the display rewritings in which the white and black display of the checker pattern was reversed was repeated by over 20 times, and then the number of the stuck pixels was counted. The results were shown in Table 1.

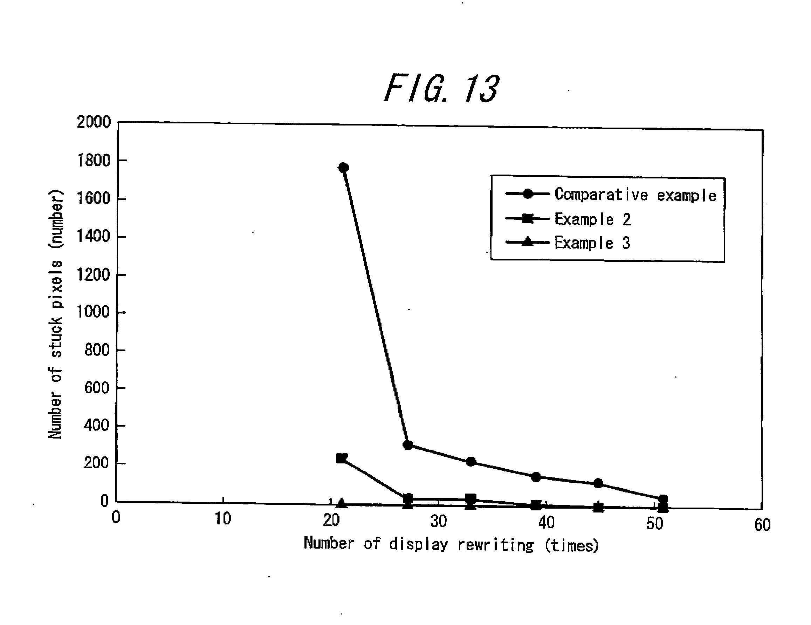

In the result shown in Fig. 13, the example 2, the example 3 and the comparative example are compared. From the figure, it is understood that the number of stuck pixels in the example 2 and the example 3 is reduced as compared with the comparative example. In Table 1, a symbol "x" means the case that there is the stuck pixels and it is considered as no-good image quality, and a symbol "O" means the case that there is no stuck pixels and it is considered as improved image quality. In this case, the voltage applying time and the voltage amplitude are designed by experimentally consider the applying time in which the display is not rewritten, and are varied in relation to a filling amount of the display media. However, they may be designed with taking into consideration of the applying time at erasing, the voltage amplitude at erasing and t threshold value with respect to the particle movement, and are not limited to the values in the examples.

[Table 1]

| | Pulse voltage for display rewriting | | Cancel Voltage applying | Cancel voltage | | | Effects |
|---|---|---|---|---|---|---|---|
| | ON time (μs) | OFF Time (μs) | | ON Time (μs) | OFF time (μs) | Pulse number (number) | |
| Comparative example | 100 | 150 | Not applied | - | - | - | × |
| Example 1 | 100 | 150 | Applied | 10 | 50 | 5 | O |
| Example 2 | 100 | 150 | Applied | 10 | 50 | 10 | O |
| Example 3 | 100 | 150 | Applied | 30 | 50 | 30 | O |
| Example 4 | 80 | 150 | Applied | 10 | 50 | 5 | O |
| Example 5 | 80 | 150 | Applied | 10 | 50 | 10 | O |
| Example 6 | 80 | 150 | Applied | 30 | 50 | 30 | O |
| Example 7 | 110 | 150 | Applied | 10 | 50 | 5 | O |
| Example 8 | 110 | 150 | Applied | 10 | 50 | 10 | O |
| Example 9 | 110 | 150 | Applied | 30 | 50 | 30 | O |

From the results of Fig. 13 and Table 1, it is understood that the examples 1 - 9 in which the cancel voltage according to the invention is used can prevent a generation of the stuck pixels as compared with the comparative example in which the cancel voltage according to the invention is not used. Moreover, from Fig. 13 in which the pulse width 10 μs of the cancel voltage in the example 2 and the pulse width 30 μs of the cancel voltage in the example 3 are compared with the pulse width 100 μs of the pulse voltage for the display rewriting, it is understood that the cancel voltage applied in such a manner that the display state is not deteriorated is preferably set to a voltage having a pulse width of 10% - 30% of the pulse voltage for the display rewriting.

INDUSTRIAL APPLICABILITY

The image display panel according to the invention is applicable to the image display unit for mobile equipment such as notebook personal computers, PDA, cellular phones, handy terminal and so on; to the electric paper for electric book, electric newspaper, electric manual (instruction book) and so on; to the bulletin boards such as signboards, posters, blackboards and so on; to the image display unit for electric desk calculator, home electric application products, auto supplies and so on; to the card display unit for point card, IC card and so on; and to the display unit for electric advertisement, electric POP (Point of Presence, Point of Purchase advertising), electric price tag, electric bin tag, electric musical score, RF-ID device and so on. In addition, it is preferably applied to rewritable electric paper in which information is rewritten by means of outer electric field generating means.

**Claims**

1.  A method of driving an information display panel: in which display media constituted by particles including charged particles are sealed between two substrates, at least one substrate being transparent; in which the display media, to which an electrostatic field is applied, are made to move so as to display an information image; and in which, after an erasing wherein a color is displayed on a whole screen is performed, a rewriting of an information display is performed in such a manner that a color at the erasing is changed by applying a voltage forming electrostatic field in a reverse direction as that at the erasing, **characterized in that**, after the rewriting of the information display is finished, a voltage forming electrostatic field in the same direction as that at erasing is applied.

2.  The method of driving an information display panel according to claim 1, wherein the voltage forming electrostatic field in the same direction as that at erasing is applied to at least pixel electrode in which a color of the erasing is displayed.

3.  The method of driving an information display panel according to claim 2, wherein, in the case of using a passive driving method, the voltage forming electrostatic field in the same direction as that at erasing is applied to the pixel electrode wherein the color at the erasing is not displayed in such a manner that a display state is not deteriorated.

4.  The method of driving an information display panel according to claim 3, wherein the electrostatic filed formation voltage in the same direction as that at erasing applied in such a manner that the display state is not deteriorated: is a rectangular wave; has an applying time in a range of 10% - 30% with respect to an applying time of a rewriting voltage of the information display; and is applied to a whole screen at the same time.

5.  The method of driving an information display panel according to claim 1 or 2, wherein, in the case of using an active driving method, the voltage forming electrostatic field in the same direction as that at erasing is selectively applied to the pixel electrode wherein the color at the erasing is displayed.

6.  The method of driving an information display panel according to one of claims 1 - 5, wherein an application of the voltage forming electrostatic field in the same direction as that at erasing is performed at least before maintaining the information display panel for a long time.

7.  The method of driving an information display panel according to one of claims 1 - 5, wherein an application of the voltage forming electrostatic field in the same direction as that at erasing is performed at every rewriting of the information display.

8.  An information display panel: in which display media constituted by particles including charged particles are sealed between two substrates, at least one substrate being transparent; in which electrode pairs formed by opposing the electrodes respectively arranged to the two substrates are arranged in a matrix; and in which the display media, to which an electrostatic field is applied from the electrode pairs, are made to move so as to display an information image, **characterized in that** the information display panel is driven by the method of driving an information display panel set forth in one of claims 1 - 7.

# FIG. 1

(a)

(b)

# FIG. 2

(a)

(b)

# FIG. 3

(a)

(b)

EP 2 234 095 A1

# *FIG. 4*

## (a)

Case 1 of passive driving
(Whole black erasing → white display rewriting)

## (b)

Case 1 of passive driving
(Whole black erasing → black display maintaining)

15

# FIG. 5

## (a)

Case 2 of passive driving
(Whole white erasing → black display rewriting)

## (b)

Case 2 of passive driving
(Whole white erasing → white display maintaining)

# FIG. 6

Case of active driving

# FIG. 7

Whole erasing (black)

Display rewriting
(Checker pattern)

Long-term
preservation

Next display

Whole panel black display
Generating electrostatic
field in the same
direction as that at erasing
Applying pulse voltage

16 dots

16 dots

EP 2 234 095 A1

# FIG. 8

Whole erasing (white)

Display rewriting
(Checker pattern)

Long-term
preservation

Next display

Whole panel white display
Generating electrostatic
field in the same
direction as that at erasing
Applying pulse voltage

16 dots

16 dots

EP 2 234 095 A1

## FIG. 9

Erasing → Rewriting of display information → Applying electrostatic field formation voltage in the same direction as that at erasing → Long-term preservation

EP 2 234 095 A1

# FIG. 10

Erasing

Rewriting of
display information

Applying electrostatic field
formation voltage in the same
direction as that at erasing

A → ■ → あ → あ ─┐

Erasing

Rewriting of
display information

Applying electrostatic field
formation voltage in the same
direction as that at erasing

┌→ ■ → い → い → ...

EP 2 234 095 A1

# FIG. 11

Square cell
grid arrangement

Square cell
honeycomb arrangement 1

Circular cell
grid arrangement

Line cell

honeycomb arrangement

Triangular cell
grid arrangement

Circular cell
honeycomb arrangement

Triangular cell
honeycomb arrangement

Square cell
mesh arrangement

Square cell
honeycomb arrangement 2

EP 2 234 095 A1

# FIG. 12

Whole erasing (black)

Display rewriting
(Checker pattern)

Conventional
(known example)

Long-term
preservation
(accelerating test
by heating)

Counting the number of
non-moved particles
(white/black) stuck to
substrate under nega display

Forming electrostatic field in the same
direction as that when black display erasing is
performed to whole panel befor long-term preservation
(examples 1-6)

Same condition
as that at
display rewriting

Generation of non-moved
particles by sticking

FIG. 13

EP 2 234 095 A1

**INTERNATIONAL SEARCH REPORT**

International application No.

PCT/JP2008/072673

**A. CLASSIFICATION OF SUBJECT MATTER**
*G09G3/34(2006.01)i, G02F1/167(2006.01)i, G02F1/17(2006.01)i, G09G3/20 (2006.01)i*

According to International Patent Classification (IPC) or to both national classification and IPC

**B. FIELDS SEARCHED**

Minimum documentation searched (classification system followed by classification symbols)
G09G3/34, G02F1/167, G02F1/17, G09G3/20

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2008 |
| Kokai Jitsuyo Shinan Koho | 1971-2008 | Toroku Jitsuyo Shinan Koho | 1994-2008 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2002-116734 A (Seiko Epson Corp.), 19 April, 2002 (19.04.02), Par. Nos. [0133] to [0141]; Fig. 26 & JP 2006-23757 A & US 2002/0005832 A1 & US 2004/0212870 A1 | 1-8 |
| P,A | JP 2008-129179 A (Fuji Xerox Co., Ltd.), 05 June, 2008 (05.06.08), Par. Nos. [0154] to [0182]; Figs. 2 to 4 (Family: none) | 1-8 |

☐ Further documents are listed in the continuation of Box C.      ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 25 December, 2008 (25.12.08) | 13 January, 2009 (13.01.09) |

| Name and mailing address of the ISA/ | Authorized officer |
|---|---|
| Japanese Patent Office | |
| Facsimile No. | Telephone No. |

Form PCT/ISA/210 (second sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002082361 A